# EUROPÄISCHE PATENTSCHRIFT

(11) **EP 0 267 313 B1**
(45) Veröffentlichungstag und Bekanntmachung des Hinweises auf die Patenterteilung: **29.12.1993**
(21) Anmeldenummer: 86115654.5
(22) Anmeldetag: 11.11.1986
(51) Int. Cl.: B23D 49/00

(54) **Schwert für eine Säge mit zwei gegensinnig hin- und herbewegbaren Sägeblättern**
Guide bar for a saw having two saw blades sliding in opposite direction to each other
Bar de guidage pour une scie avec deux lames oscillantes en sens inverse

(43) Veröffentlichungstag der Anmeldung: 18.05.1988
(73) Patentinhaber: Black & Decker Inc., Newark Delaware 19711 (US)
(72) Erfinder: Berghäuser, Ulrich, D-6204 Taunusstein (DE); Grossmann, Horst, D-6257 Hünfelden 1 (DE); Staas, Ernst, D-6259 Brechen 1 (DE)
(74) Vertreter: Suchantke, Jürgen

(56) Entgegenhaltungen:
- US-A- 2 784 751
- US-A- 2 840 125
- US-A- 2 895 514

## Beschreibung

Die Erfindung bezieht sich auf ein Schwert an einer Säge mit zwei nebeneinander, parallel zueinander angeordneten, gegensinnig hin- und herbewegbaren Sägeblättern, die jeweils an ihrer Außenseite eine in Längsrichtung verlaufende Längsschulter aufweisen, die den Sägezähnen abgewandt ist, wobei das Schwert zwei flächig miteinander verbundene Teilplatten aufweist, die mit ihren den Sägeblättern zugewandten Bereichen Trägerabschnitte bilden, zwischen denen ein Aufnahmeschlitz für die Aufnahme der oberhalb der Längsschultern liegenden Abschnitte der Sägeblätter vorgesehen ist.

Bei einem bekannten Schwert dieser Art (DE-A-3 329 824) werden die Teilplatten aus zwei streifenförmigen Metallteilen gebildet, die über ihre gesamte axiale Länge die gleiche Höhe haben und die aus verhältnismäßig dickem Material bestehen, so daß sich eine große Festigkeit ergibt, jedoch wegen der Abmessungen auch eine erhebliche Schnittbreite entsteht. Die miteinander verbundenen streifenförmigen Teilplatten bilden in ihrem unteren Mittelbereich einen Schlitz, in den sich die oberen Abschnitte der Sägeblätter erstrecken, so daß die Längsschultern der Sägeblätter unmittelbar benachbart zu den Unterkanten der die Trägerabschnitte bildenden unteren Bereiche der Teilplatten liegen. Die Außenflächen der Teilplatten fluchten über ihre ganze Höhe mit den Außenflächen der Sägeblätter.

Das bekannte Schwert hat wegen seiner über die ganze axiale Länge gleichen Höhe nur dann eine ausreichende Festigkeit, wenn die Teilplatten eine ausreichende Dicke haben, wodurch, wie vorstehend bereits erwähnt, eine erhebliche Schnittbreite entsteht. Wollte man bei dem bekannten Schwerte eine dünne Ausbildung der Teilplatten vorsehen, so hätte dies nicht nur Festigkeitsprobleme für das Schwert zur Folge, sondern es kann beim Durchtrennen von Werkstücken dann auch vorkommen, daß sich der von den Sägeblättern hergestellte Einschnitt im Werkstück, der wegen der nach außen geschränkten Zähne etwas breiter als die Dicke des Schwertes ist, wieder etwas schließt, wenn die unteren Abschnitte der Sägeblätter verhältnismäßig tief in das Werkstück eingedrungen sind. Dieses Schließen des hergestellten Einschnittes kann dazu führen, daß sich die oberen Randbereiche des Einschnittes an die Außenseiten des Schwertes anlegen und so das weitere Einführen der Säge in das Werkstück behindern. Dies kann sogar so weit führen, daß das Schwert im hergestellten Einschnitt des Werkstückes festgeklemmt wird und der Benutzer nicht mehr in der Lage ist, die Säge in der einen oder anderen Richtung zu bewegen. Es muß dann ein Aufhebeln des im Werkstück hergestellten Einschnittes vorgenommen werden.

Auch bei einer anderen bekannten Säge (US-A-2 840 125), bei der das Schwert aus einem U-förmig gebogenen Bauteil hergestellt ist, das zwei parallele Schenkel hat, ergibt sich das Problem des möglichen Festklemmens im Werkstück.

Es ist Aufgabe der Erfindung, das Schwert einer Säge der interessierenden Art derart auszubilden, daß sich auch bei der Bearbeitung verhältnismäßig hoher Werkstücke bzw. bei der Herstellung verhältnismäßig tiefer Einschnitte in einem Werkstück kein Festklemmen des zudem sehr einfach und stabil aufgebauten Schwertes ergibt.

Zur Lösung dieser Aufgabe dient ein Schwert an einer Säge mit zwei nebeneinander, parallel zueinander angeordneten, gegensinnig hin- und herbewegbaren Sägeblättern, die jeweils an ihrer Außenseite eine in Längsrichtung verlaufende Längsschulter aufweisen, die den Sägezähnen abgewandt ist, wobei das Schwert zwei flächig miteinander verbundene Teilplatten aufweist, die mit ihren den Sägeblättern zugewandten Bereichen Trägerabschnitte bilden, zwischen denen ein Aufnahmeschlitz für die Aufnahme der oberhalb der Längsschultern liegenden Abschnitte der Sägeblätter vorgesehen ist, das sich erfindungsgemäß dadurch auszeichnet, daß die Teilplatten im Bereich der Trägerabschnitte nach außen versetzt sind und die Unterkanten der Trägerabschnitte die Längsschultern der Sägeblätter abstützen und daß die Höhe des Schwertes im Bereich der Verbindung mit der Säge größer ist als am gegenüberliegenden Ende.

Bei dem erfindungsgemäßen Schwert sind die Teilplatten in ihren Trägerbereichen, d.h. in den unteren Bereichen, die den Aufnahmeschlitz für die Sägeblätter bilden, nach außen versetzt, so daß sich für den gesamten Aufbau eine Art Abstufung ergibt, in der die Sägeblätter in ihren unteren, die Sägezähne aufweisenden Bereichen die größte Breite haben und dadurch die Breite des im Werkstück herzustellenden Einschnittes definieren. Im Bereich der nach außen versetzten Trägerabschnitte ist die Dicke des Schwertes zwar etwas geringer als die durch die Sägezähne definierte Breite des Einschnittes, doch bilden die nach außen versetzten Trägerabschnitte stabile Abstützungen für die Längsschultern der Sägeblätter, durch die diese gegen ein Aufspreizen gesichert werden. Oberhalb der Trägerabschnitte sind die flächig miteinander verbundenen Teilplatten dann nicht mehr nach außen versetzt, haben dadurch also eine geringere Dicke als im Bereich der Trägerabschnitte. Wenn sich daher bei Herstellung eines verhältnismäßig tiefen Einschnittes in einem Werkstück der Einschnitt im oberen Bereich wieder etwas schließt, so kommen die Seitenwände des Einschnittes nicht in direkte Berührung mit dem Schwert, da das Schwert in dem interessierenden Bereich eine geringere Dicke als im Bereich der Trägerabschnitte hat. Die Gefahr des Einklemmens des Schwertes ist daher deutlich verringert.

Da darüber hinaus die Höhe des Schwertes im Bereich mit der Verbindung der Säge größer ist als am gegenüberliegenden Ende ergibt sich auch eine Anpassung an die im Betrieb auftretenden Biegebelastungen, so daß die Dicke des Schwertes verhältnismäßig gering gewählt werden kann, ohne daß dies zu einer Verformung des Schwertes führen würde, während dadurch geringe Schnittbreiten erreicht werden, was erwünscht ist.

Die Teilplatten werden vorzugsweise durch Punktschweißung oder Klebung miteinander verbunden.

Um eine einfache, schnell herstellbare und schnell lösbare Halterung der Sägeblätter im Schwert zu erreichen, können aus den Wandungen der Trägerabschnitte mit einem Ende mit der jeweiligen Wandung verbundene, elastisch verschwenkbare Blattfederstreifen ausgeschnitten sein, die sich in der Ruhelage mit einem Teilbereich in die jeweils benachbarte Hälfte des Raums zwischen den Trägerabschnitten erstrecken und nicht über die Außenfläche des zugehörigen Trägerabschnitts vorspringen.

Diese Blattfederstreifen können sich bei eingesetzten Sägeblättern in in diesen vorhandene Schlitze erstrecken und so die Sägeblätter gegen senkrechte Verlagerung bezüglich des Schwertes abstützen. Das Einsetzen der Sägeblätter ist besonders einfach, weil diese beim Einsetzen die Blattfederstreifen auseinanderdrücken, die dann in die Schlitze in den Sägeblättern einrasten, während die Blattfederstreifen zum Entfernen der Sägeblätter nach dem Lösen von den Schneidblatthalterungen so von Hand verschoben werden, daß sie aus den Schlitzen der Sägeblätter austreten und dabei elastisch nach außen verschwenkt werden.

Selbstverständlich springen die Blattfederstreifen nicht nach außen über die Außenfläche des zugehörigen Trägerabschnittes vor, da sie dann das Eintauchen des Schwertes in das Werkstück behindern würden.

Um sich im Raum zwischen den Trägerabschnitten ansammelndes, zerspantes Material entfernen zu können, können in den Wandungen der Trägerabschnitte den Raum zwischen diesen mit den Schwertaußenflächen verbindende Bohrungen vorgesehen sein.

Die Erfindung wird im folgenden anhand der Figuren näher erläutert.
- Figur: 1 zeigt in einer Seitenansicht ein kraftgetriebenes Werkzeug in Form einer elektrisch angetriebenen, tragbaren Säge.
- Figur 2: zeigt eine Draufsicht auf die Säge aus Figur 1.
- Figur 3: zeigt eine Ansicht der Säge aus Figur 1 von rechts, wobei die Stützgriffe entfernt sind.
- Figur 4: zeigt eine Ansicht der Säge aus Figur 1 von links.
- Figur 5: zeigt eine Explosionsdarstellung der Säge aus den Figuren 1 bis 4.
- Figur 6: zeigt in einer Teildarstellung, teilweise aufgebrochen und teilweise im Schnitt den den Motor das Getriebe und die Schneidblatthalterungen enthaltenden Teil der Säge gemäß Figuren 1 bis 5.
- Figur 7: zeigt einen Schnitt entlang der Linie VII-VII aus Figur 6.
- Figur 8: zeigt in einer Seitenansicht das Schwert der Säge gemäß Figuren 1 bis 7.
- Figur 9: zeigt in einer Teilansicht den vorderen Teil des Schwertes aus Figur 8 mit eingesetzten Sägeblättern.
- Figur 10: zeigt einen Teilschnitt entlang der Linie X-X aus Figur 9.
- Figur 11: zeigt vergrößert die Einzelheit aus dem Kreis 2 aus Figur 9.
- Figur 12: zeigt einen Teilschnitt entlang der Linie XII-XII aus Figur 11, wobei die Sägeblätter weggelassen sind.
- Figur 13: zeigt in einer Teilansicht ein anderes Schwert mit eingesetzten Sägeblättern.
- Figur 14: zeigt einen Teilschnitt entlang der Linie XIV-XIV aus Figur 13.

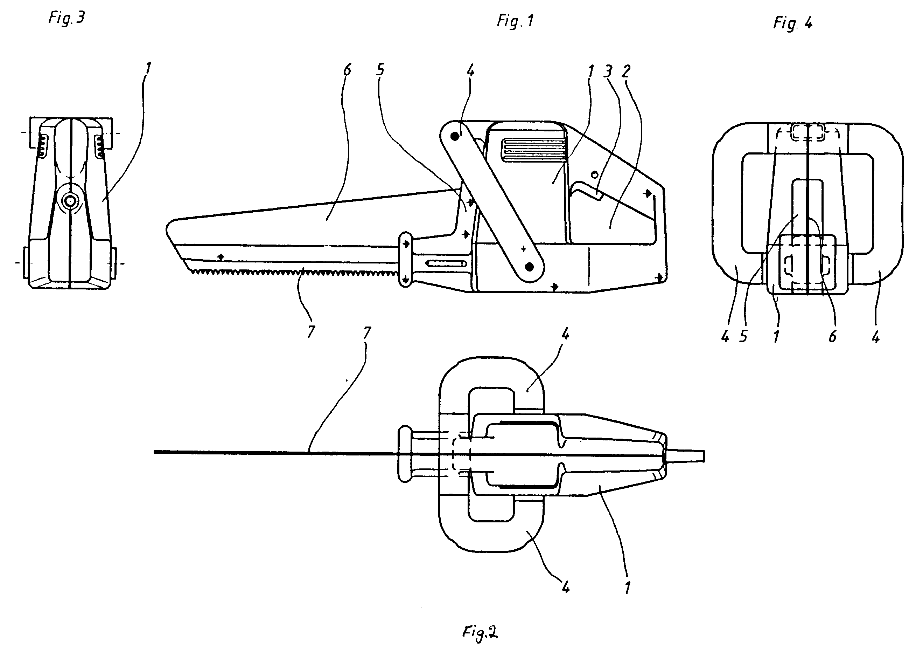

Die in den Figuren 1 bis 4 gezeigte Säge hat ein in üblicher Weise aus Halbschalen aufgebautes Gehäuse 1, in dem ein Elektromotor 10, gegebenenfalls jedoch auch ein Verbrennungsmotor, die Getriebeanordnung und die Schneidblatthalterungen 15 und 18 untergebracht sind. Am hinteren Teil des Gehäuses 1 ist eine Grifföffnung 2 ausgebildet, in die sich in üblicher Weise der von Hand zu betätigende Drücker 3 eines Ein-Aus-Schalters 3' erstreckt. Am vorderen Teil des Gehäuses 1 ist eine nur schematisch gezeigte Befestigungsanordnung 5 zur Anbringung eines Schwertes 6 vorgesehen, das die oberen Bereiche der sich gegensinnig hin- und herbewegenden Sägeblätter abstützend umgreift. Vom Gehäuse 1 erstrecken sich zwischen Öffnung 2 und Schwert 6 seitlich Stützgriffe 4.

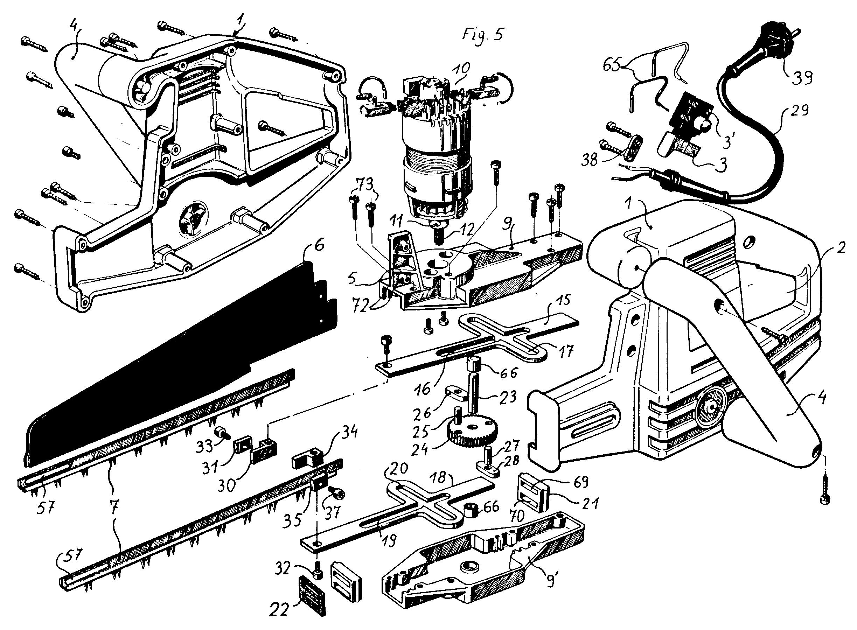

Wie Figur 5 zu entnehmen ist, wird am Griffteil des Gehäuses 1 durch eine Zugentlastungsplatte 38 ein Anschlußkabel 29 mit Stecker 39 befestigt, und zwei kurze Kabelstücke 65 mit Anschlußklemme dienen zur Herstellung einer Leitungsverbindung vom Ein-Aus-Schalter 3' zum Elektromotor 10.

Der im Gehäuse 1 gelagerte Elektromotor 10, auf dessen Ankerwelle 11 ein Lüfterrad 13 sitzt, ist in Turmbauweise aufrecht auf einem aus Metall bestehenden Teilgehäuse 9 der Getriebeanordnung montiert. Die Ankerwelle ist an ihrem äußeren Ende als Ritzel 12 ausgebildet und erstreckt sich mit ihrem äußeren Endbereich durch das Teilgehäuse 9 und ragt durch die Längsschlitze 16 bzw. 19 der oberen bzw. unteren Schneidblatthalterung 15 bzw. 18. Das freie Ende der Ankerwelle 11 ist in einem unteren aus Metall bestehenden Teilgehäuse 9' in einem Lager 14 gelagert.

Wie insbesondere Figur 5 zu entnehmen ist, haben die Schneidblatthalterungen 15, 18 Kreuzform und weisen zusätzlich zu den Längsschlitzen 16, 19 quer dazu verlaufende Führungsschlitze 17, 20 auf. Man erkennt, daß die Längsschlitze 16, 19 von den Führungsschlitzen 17, 20 durch keinen Steg getrennt sind, so daß die Ankerwelle 11 bei einer Längsverschiebung der Schneidblatthalterungen 15, 18 aus einem Bereich der Längsschlitze 16, 19 durch den Bereich der Führungsschlitze 17, 20 in den gegenüberliegenden anderen Bereich der Längsschlitze 16, 19 gelangen kann.

Parallel zur Ankerwelle 11 erstreckt sich durch das Teilgehäuse 9 im Bereich näher zur Grifföffnung 2 eine Lagerachse 23, die an beiden Enden drehbar in Lagerbuchsen 66 in den Teilgehäusen 9, 9' gelagert ist und auf der unverdrehbar ein Zahnrad 24 befestigt ist, das in kämmendem Eingriff mit dem Ritzel 12 steht.

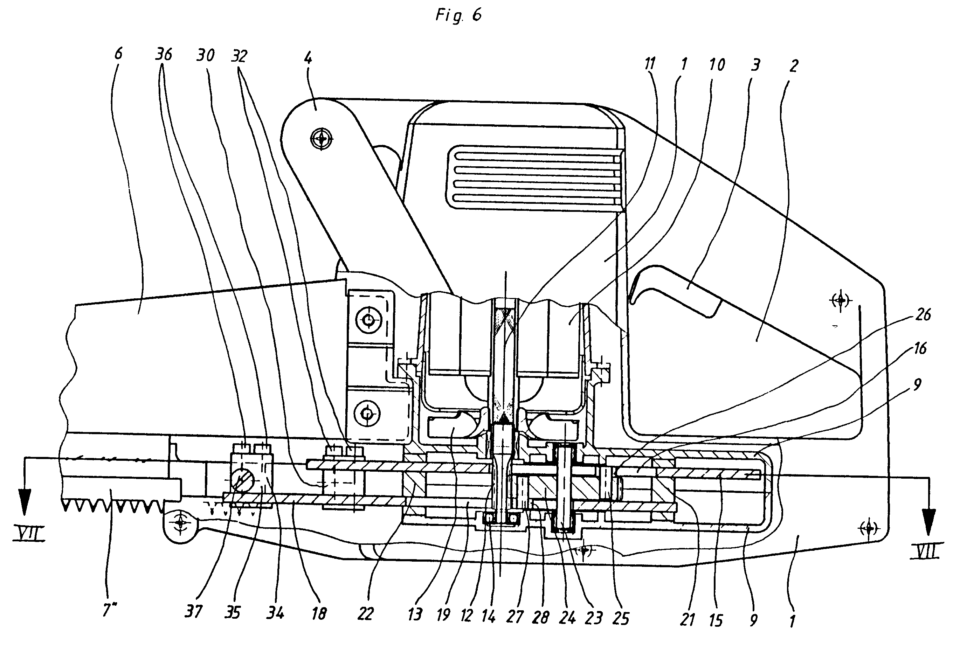

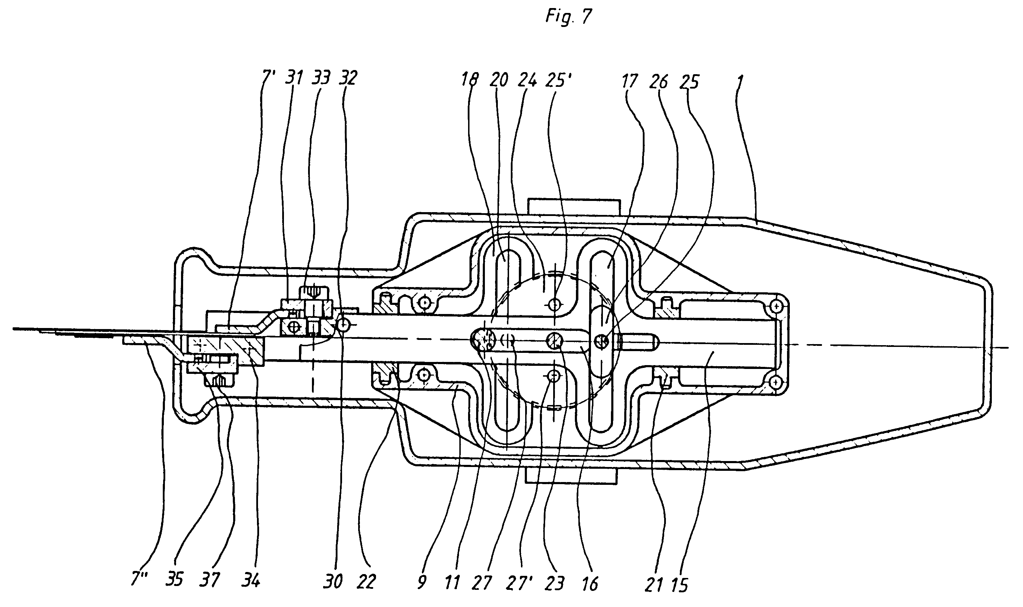

Das Zahnrad 24 befindet sich zwischen den beiden Schneidblatthalterungen 15, 18, und seine Lagerachse 23 erstreckt sich ebenso wie die Ankerwelle 11 durch die Längsschlitze 16, 19, wobei die Länge der Längsschlitze 16, 19 so gewählt ist, daß die Schneidblatthalterungen 15, 18 in der nachstehend zu beschreibenden Weise über ihren gesamten Hub in der Zeichenebene gemäß Figuren 6 und 7 in Richtung ihrer Längserstreckung hin- und herbewegbar sind. An gegenüberliegenden Seiten des Zahnrades 24 sind Exzenterstifte 25, 27 angebracht, auf deren äußeren Enden drehbar Gleitsteine 26, 28 gelagert sind. Bei normaler, für den Gebrauch üblicher und in den Figuren 5 und 6 dargestellter Lage der Säge liegt der Gleitstein 26 oberhalb des Zahnrades 24 und der Gleitstein 28 unterhalb des Zahnrades 24. Der Gleitstein 26 steht in Eingriff mit dem Führungsschlitz 17 der oberen Schneidblatthalterung 15 und der Gleitstein 28 mit dem Führungsschlitz 20 der unteren Schneidblatthalterung 18. Dadurch ist der Abstand zwischen den beiden Schneidblatthalterungen 15 und 18 lediglich etwa gleich der Dicke des Zahnrades 24.

Die Länge der Gleitsteine 26, 28 entspricht mindestens 2 mal der Breite des Längsschlitzes 16 bzw. 19 plus dem Durchmesser des zugehörigen Exzenterstiftes, um sicherzustellen, daß der Gleitstein 26, 28 in jeder Lage sicher im zugehörigen Führungsschlitz 17, 20 geführt wird und sich nicht im Übergangsbereich zum Längsschlitz 16, 19 verkantet.

Die Exzenterstifte 25 und 27 liegen auf einer Diagonalen durch die Mittelachse des Zahnrades 24 und haben den gleichen radialen Abstand von der Lagerachse 23.

Die Schneidblatthalterungen 15, 18 werden durch zwei Lagerblöcke 21, 22 abgestützt, die zwei zueinander parallel verlaufende und durch einen Steg getrennte Schlitze 69, 70 aufweisen. Die Höhe und Breite der Schlitze 69, 70 ist so gewählt, daß die länglichen, im Querschnitt im wesentlichen rechteckförmigen Schneidblatthalterungen 15, 18 mit leichtem Spiel hindurchpassen, so daß eine gute Längsführung für die Schneidblatthalterungen 15, 18 erreicht wird. Die Lagerblöcke 21, 22 sind am Vorderende bzw. am Hinterende des Teilgehäuses 9, 9' eingesetzt und durch Schwalbenschwanzführungen oder ähnliche Führungsrillen, die ein Kippen der Lagerblöcke 21, 22 verhindern, gehalten.

An den aus den Teilgehäuse 9 9' vorstehenden, in den Figuren 6 und 7 links liegenden Enden der Schneidblatthalterungen 15, 18 sind Schneidblattaufnahmen in Form von Klemmen befestigt, die aus einem mittels Schrauben 32 an den Schneidblatthalterungen 15 bzw. 18 befestigten Klemmblöcken 30 und 34 sowie gegen diese mittels jeweils einer Klemmschraube 33 bzw. 37 drückbaren Klemmstücken 31 bzw. 35 bestehen. Wie in Figur 7 angedeutet, ist zwischen dem Klemmblock 30 und dem Klemmstück 31 das abgekröpfte Ende eines Sägeblattes 7' eingeklemmt, während zwischen dem Klemmblock 34 und dem Klemmstück 35 das hintere Ende eines abgekröpften Abschnittes eines Sägeblattes 7'' gehalten ist. An diesen abgekröpften Enden sind in nicht dargestellter Weise die Sägeblattschäfte befestigt, etwa durch Schweißung, und durch die Abkröpfung wird erreicht, daß die hin- und herzubewegenden Sägeblätter unmittelbar benachbart zueinander liegen.

Wird die Ankerwelle 11 vom Motor 10 angetrieben, so dreht sie mittels ihres Ritzels 12 das Zahnrad 24, wodurch die Exzenterstifte 25 und 27 eine Umlaufbewegung um die Mittelachse der Lagerachse 23 ausführen. Infolge dieser Umlaufbewegung verlagern sich die Gleitsteine 26 und 28 entsprechend und bewegen sich in den Führungsschlitzen 17 und 20 hin und her, wobei sie, wegen der Umlaufbewegung die zugehörige Schneidblatthalterung 15, 18 auch in Richtung der Längserstreckung dieser Schneidblatthalterung vor- und zurück- oder hin- und herbewegen. Geht man in diesem Zusammenhang davon aus, daß die Bewegung aus der Position gemäß Figur 7 startet, so wird bei Drehung des Zahnrades 24 die Schneidblatthalterung 15 aus ihrer in Figur 7 äußeren rechten Stellung nach links und die Schneidblatthalterung 18 aus ihrer in Figur 7 äußeren linken Stellung nach rechts verlagert, d.h. die Schneidblatthalterungen 15 und 18 werden entgegengesetzt zueinander hin- und herbewegt, wobei der Hub der beiden Schneidblatthalterungen gleich ist, weil der Abstand der zugehörigen Exzenterstifte 25, 27 von der Lagerachse 23 des Zahnrades 24 gleich ist.

Bei dieser Hin- und Herbewegung der Gleitsteine 26 und 28 in den Führungsschlitzen 17 und 20 überlaufen die Gleitsteine auch die die Führungsschlitze kreuzenden Längsschlitze 16, 19, ohne daß es zu einer Beeinträchtigung der Bewegung der Gleitsteine käme, weil diese infolge ihrer Abmessung immer sicher in den Führungsschlitzen 17 und 20 geführt werden und nicht im Kreuzungsbereich mit den Längsschlitzen 16, 19 verkanten können.

Wie in Figur 7 angedeutet, können im Zahnrad 24 zusätzliche Paare von Bohrungen 25', 27' vorhanden sein. Diese Bohrungen 25', 27' liegen näher an der Lagerachse 23 als die Exzenterstifte 25, 27, haben jedoch von der Lagerachse 23 beide den gleichen Abstand. Werden daher die Exzenterstifte 25, 27 in die Bohrungen 25' und 27' eingesetzt, so ergibt sich bei ansonsten praktisch gleichem Aufbau der Säge ein kleinerer Hub der Schneidblatthalterungen 15 und 18.

Das plattenförmige Schwert 6, dessen Aufbau später beschrieben werden wird, ist mittels der an seinem Befestigungsende vorgesehenen Bohrungen 87 an einem Vorsprung 5 befestigt, der am Teilgehäuse 9 angeformt ist und eine hintere Verstärkungsrippe 71 aufweist. Durch die senkrechte Wand des Vorsprungs 5 erstrecken sich angeformte oder aufgesetzte Schraubenbuchsen 72 für die Aufnahme von Klemmschrauben 73, die sich durch die Befestigungsbohrungen 87 des Schwertes 6 erstrecken.

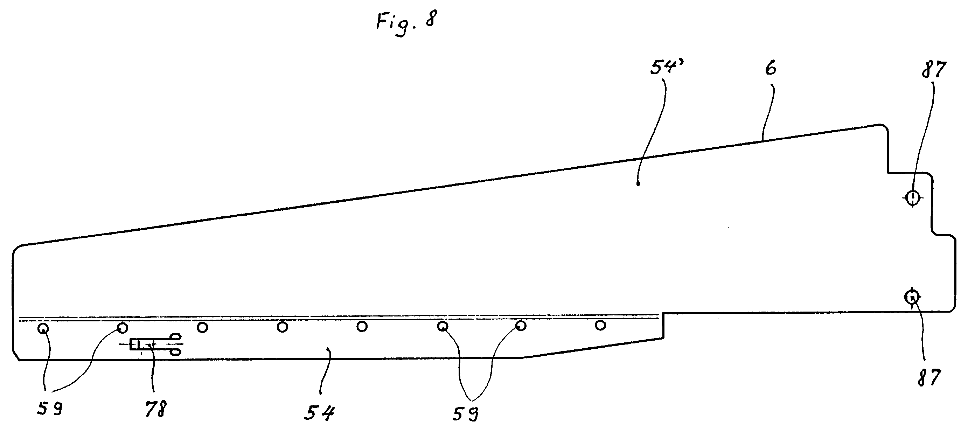

Der Aufbau des Schwertes und der Sägeblätter sowie deren Zusammenwirken ist am deutlichsten in den Figuren 8 bis 12 zu erkennen.

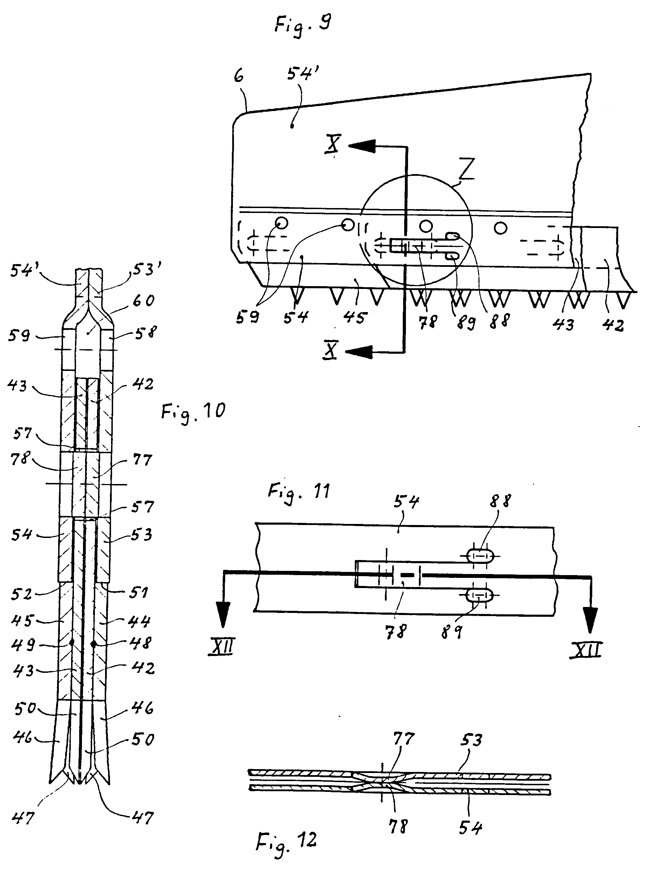

Wie dargestellt, ist das Schwert 6, das an seinem die Befestigungsbohren 87 aufweisenden Ende höher ist als am gegenüberliegenden Ende, aus zwei Platten 53', 54' zusammengesetzt (Figur 10), die beispielsweise durch Punktschweißung miteinander verbunden sind. Dadurch ergibt sich eine hohe Stabilität gegen Verbiegen und Verwinden. Die Platten 53', 54' können beispielsweise aus Stahl oder Aluminium bestehen und bewirken eine gute Wärmeableitung. Im unteren Bereich sind die Platten 53', 54' Trägerabschnitte 53, 54 bildend nach außen versetzt, so daß zwischen ihnen ein Zwischenraum gebildet wird, in den die oberen Bereiche der beiden Sägeblätter eingesetzt und gehalten werden können.

Wie insbesondere Figur 10 zu entnehmen ist, sind die Sägeblätter jeweils aus einem Hauptabschnitt 42, 43 und einem Abschnitt 44, 45 geringerer Höhe zusammengesetzt, die, wie bei 48 bzw. 49 angedeutet, durch Punktschweißung verbunden sind. Die obere Kante des Abschnittes 44 bzw. 45 der Einheit aus Abschnitt 44 bzw. 45 und Hauptabschnitt 42 bzw. 43 bildet eine Längsschulter 51 bzw. 52, die sich im Betrieb an der unteren Kante des Trägerabschnittes 53 bzw. 54 abstützt (Figur 10), während, wie auch Figur 10 zu entnehmen ist, die oberen Kanten der Hauptabschnitte 42, 43 unterhalb des oberen Endes der Trägerabschnitte 53, 54 enden, so daß oberhalb der Hauptabschnitte 42, 43 ein Freiraum 60 gebildet ist, die Hauptabschnitte 42, 43 also nicht an ihren oberen Kanten abgestützt werden.

An den unteren Enden der Abschnitte 44, 45 sind Sägezähne 46, 47 ausgebildet, von denen die Sägezähne 46 nach außen geschränkt sind, so daß sie über die Außenfläche des zugehörigen Abschnittes 44, 45 vorstehen und dadurch einen Einschnitt im Werkstück erzeugen, der breiter ist als die maximale Materialdicke der beiden Sägeblätter. Die an den Abschnitten 44 und 45 vorhandenen Sägezähne 47 sind nach innen geschränkt, so daß sie sich bis in den Bereich unterhalb des zugehörigen Hauptabschnittes 42, 43 erstrecken. An diesen Hauptabschnitten 42, 43 befinden sich ungeschränkte Sägezähne 50, die jedoch von ihren Außenkanten schräg nach außen angeschliffen sind.

Die Sägeblätter haben parallel zu den Längsschultern 51, 52 verlaufende Längsschlitze 57 (Figur 5), deren Endbereiche gestrichelt in Figur 9 angedeutet sind. In diese Längsschlitze erstrecken sich Blattfederstreifen 77, 78, die in noch zu beschreibender Weise am Schwert 6 ausgebildet sind. Durch diese Blattfederstreifen 77, 78 werden die Sägeblätter im vorderen Bereich der Trägerabschnitte 53, 54 zwischen diesen in Längsrichtung hin- und herbewegbar geführt, und die Blattfederstreifen 77, 78 verhindern das Lösen der Sägeblätter aus dem Schwert 6, wobei die Sägeblätter mit ihren hinteren Enden in der vorstehend beschriebenen Weise an den Schneidblatthalterungen 15, 18 befestigt sind.

Im Betrieb kommen die Sägezähne 46, 47, 50 der Sägeblätter in Eingriff mit einem Werkstück, wobei die Verlagerung der Sägeblätter in das Schwert 6 hinein durch die Längsschultern 51, 52 verhindert wird, indem die Trägerabschnitte 53, 54 auf diese Längsschulter eine abstützende Kraft ausüben. Diese nach unten auf die Längsschultern 51, 52 ausgeübten Kräfte bewirken, insbesondere wenn, wie dargestellt, der Abschnitt 44, 45 und der Hauptabschnitt 42, 43 gleiche Dicke haben oder gar die Abschnitte 44, 45 geringere Dicke als die Hauptabschnitte 42, 43 aufweisen, auch ein Drehmoment, das die Sägeblätter in ihrem unteren, die Sägezähne tragenden Bereich zusammendrückt, so daß die ungeschränkten Sägezähne 50 gegeneinander gedrückt werden. Gleichzeitig wirkt auf die nach außen geschränkten Sägezähne 46 infolge des Eingriffs mit dem Werkstück eine nach oben und auch nach außen gerichtete Kraft, zumal die Sägezähne 46 auch noch von oben nach unten schräg nach außen angeschliffen sind. Diese Kraft wirkt in Richtung des Auseinanderdrückens der Sägeblätter im Bereich der Sägezähne 50. Die Sägezähne 47 sind jedoch nach innen geschränkt und haben schräg von oben nach unten und innen verlaufende, angeschliffene Kanten, so daß an ihnen eine nach oben und innen wirkende Kraft auftritt, die der Trennkraft für die Sägeblätter durch die Sägezähne 46 entgegenwirkt. Eine entsprechende Kraft greift auch an den Sägezähnen 50 an, die infolge ihres Anschliffes von innen schräg nach außen nach oben und innen wirkt.

Insgesamt können die Sägezähne 46, 47, 50 in ihrer Form und Ausrichtung so abgestimmt werden, daß auf die beiden Sägeblätter im Bereich der Sägezähne 50 durch die an den Sägezähnen 46, 47, 50 angreifenden Kräfte und durch die auf die Längsschultern 51, 52 wirkenden Abstützkräfte ein Drehmoment erzeugt wird, das die Sägeblätter in diesem Bereich zusammendrückt, so daß die Sägezähne 50 und der an sie anschließende Bereich der Hauptabschnitte 42 und 43 im Betrieb auch ohne Einhaltung enger Toleranzen fest zusammengedrückt wird und daher nicht die Gefahr besteht, daß die Sägeblätter durch zwischen sie eindringendes Material aufgespreizt werden.

Wie bereits erwähnt, werden die Sägeblätter mittels der Blattfederstreifen 77, 78 zwischen den Trägerabschnitten 53, 54 des Schwertes 6 gehalten. Diese Blattfederstreifen sind durch Stanzen an einandergegenüberliegenden Stellen aus den Wänden der Trägerabschnitte 53, 54 herausgeschnitten, so daß sie nur mit ihrem in den Figuren 9, 11 und 12 rechten Ende noch fest mit der Wand des jeweiligen Trägerabschnittes 53, 54 verbunden sind. Benachbart zu dieser Verbindung sind zur Verringerung der Kerbwirkung Öffnungen 98 und 89 in den Trägerabschnitten 53, 54 vorhanden. Beim Stanzen werden die Blattfederstreifen 77, 78 so verformt, daß sie sich mit ihren Mittelbereichen nach innen wölben, wie dies in Figur 12 zu erkennen ist, so daß sie sich gegenseitig abstützen. Sie können daher durch das Einführen der Hauptabschnitte 42, 43 der Sägeblätter zwischen die Trägerabschnitte 53, 54 auseinandergedrückt werden, und die Sägeblätter können so positioniert werden, daß ihre Schlitze 57 sich im Bereich der Blattfederstreifen 77, 78 befinden, so daß diese in die Schlitze 57 einschnappen und so die Sägeblätter gegen Verlagerungen in senkrechter Richtung (Figur 10) halten.

Da die Blattfederstreifen 77, 78 durch Einschneiden, also ohne Materialentfernung hergestellt werden, stützen sich ihre oberen und unteren Kanten im Betrieb an den entstandenen Begrenzungskanten in den Wänden der Trägerabschnitte 53, 54 ab, so daß die Blattfederstreifen 77, 78 sich im Betrieb nicht in senkrechter Richtung (Figur 10) verlagern können, also eine hohe Stabilität für die Halterung der Sägeblätter gegeben ist.

Zum Entfernen der Sägeblätter braucht der Benutzer diese von den Schneidblatthalterungen 15, 18 lediglich zu lösen und dann die Sägeblätter so zu verschieben, daß die Blattfederstreifen 77, 78 sich elastisch nach außen verlagernd aus den Schlitzen 57 in den Hauptabschnitten 42, 43 der Sägeblätter herausgedrückt werden. Die Sägeblätter können dann zwischen den Trägerabschnitten 43, 54 herausbewegt werden.

Wie in den Figuren 8 bis 10 zu erkennen ist, sind in den Trägerabschnitten 53, 54 oberhalb der oberen Kanten der Hauptabschnitte 42, 43 der Sägeblätter Durchgangsbohrungen 58, 59 vorhanden, die den Freiraum 60 (Figur 10) mit der Außenseite der Trägerabschnitte 53, 54 verbinden. Diese Bohrungen ermöglichen den Austritt von zerspantem Material, das im Betrieb zwischen die Trägerabschnitte 53, 54 gelangen kann und bei einer Ansammlung im Freiraum 60 zu Schwierigkeiten im Betrieb führen könnte.

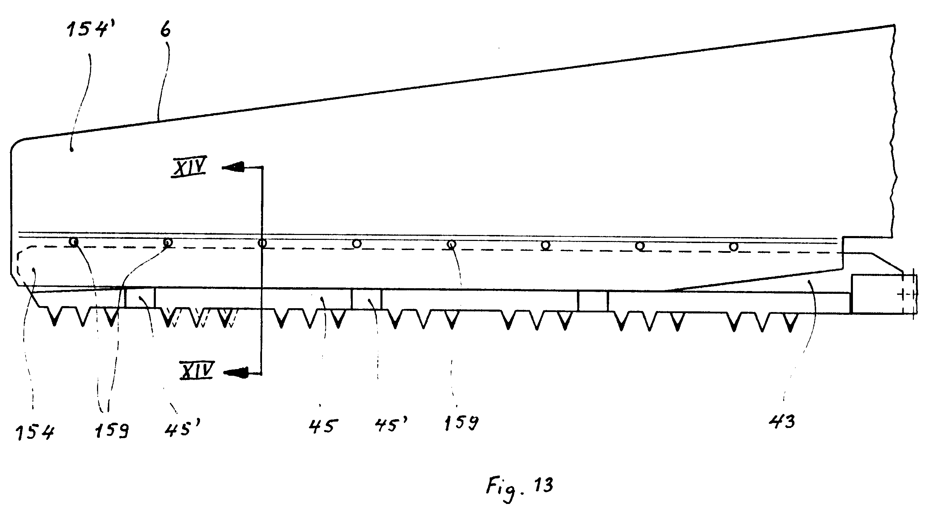

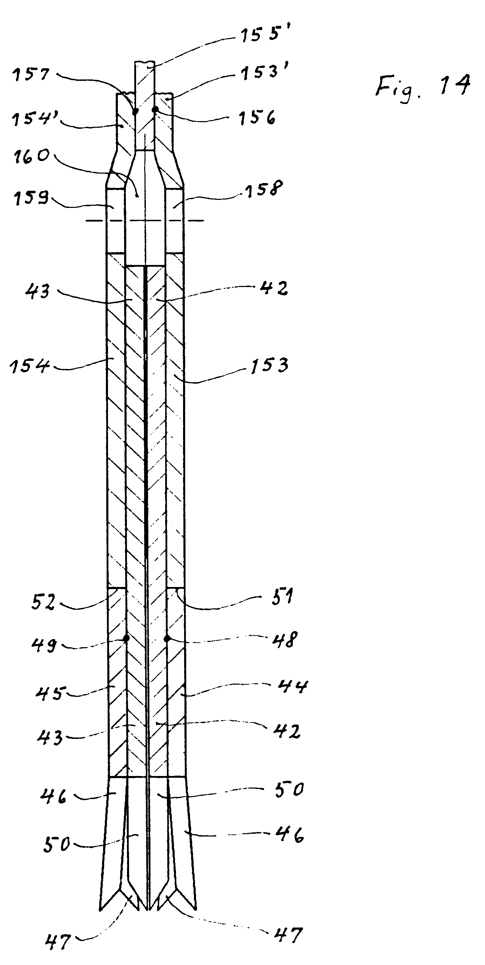

In den Figuren 13 und 14 ist ein gegenüber den Figuren 8 bis 12 etwas abgewandeltes Schwert dargestellt, in das auch etwas abgewandelte Sägeblätter eingesetzt sind. Gleiche Teile wie in den Figurn 8 bis 12 sind in den Figuren 13 und 14 mit gleichen Bezugszeichen und entsprechende Teile im allgemeinen mit um 100 erhöhten Bezugszeichen bezeichnet.

Es sei erwähnt, daß in Figur 13 die Blattfederzunge für die Halterung des benachbarten Sägeblattes nicht gezeigt wurde. In diesem Zusammenhang ist zu bemerken, daß selbstverständlich auch eine andere Art der Befestigung des Sägeblattes im vorderen Bereich des Schwertes gewählt werden könnte. Dort könnte beispielsweise ein sich durch die Trägerabschnitte 153, 154 und den zwischen ihnen befindlichen Aufnahmeraum erstreckender Niet vorhanden sein, und die Sägeblätter könnten in ihren Hauptabschnitten 42, 43 einen nach vorn offenen Schlitz aufweisen, so daß ein Einführen der Sägeblätter in den Niet möglich wäre.

Das Schwert gemäß Figuren 13 und 14 ist aus drei Teilplatten 153', 155' und 154' aufgebaut, die, wie bei 156 und 157 angedeutet, durch Punktschweißung verbunden sind. Die mittlere Platte 155' erstreckt sich nicht bis zum unteren Ende des Schwertes, sondern endet dort, wo die beiden äußeren Platten 153' und 154' die Trägerabschnitte 153, 154 bildend nach außen versetzt sind, so daß zwischen sie die Hauptabschnitte 42, 43 der Sägeblätter eingesetzt werden können.

Der Freiraum 160 oberhalb der Hauptabschnitte 42, 43 ist wiederum durch Querbohrungen 158, 159 mit der Außensseite der Trägerabschnitte 153, 154 verbunden, so daß durch diese Bohrungen zerspantes Material aus dem Freiraum 160 austreten kann.

Um dieses zerspante Material möglichst gut von den Sägezähnen abführen zu können, können in den Abschnitten 44 und 45 sich von den Sägezähnen bis zu den Längsschultern 51, 52 erstreckende Nuten 45' (Figur 13) vorhanden sein, durch die das zerspante Material nach oben abgeführt werden kann. Diese Nuten können beispielsweise dadurch ausgebildet werden, daß die Abschnitte 44, 45 in Form von Teilabschnitten mit den Hauptabschnitten 42, 43 verbunden sind, so daß zwischen den Teilabschnitten die Nuten 45' gebildet werden.

## Patentansprüche

1. Schwert (6) an einer Säge mit zwei nebeneinander, parallel zueinander angeordneten, gegensinnig hin- und herbewegbaren Sägeblättern (7), die jeweils an ihrer Außenseite eine in Längsrichtung verlaufende Längsschulter (51, 52) aufweisen, die den Sägezähnen (46, 47, 50) abgewandt ist, wobei das Schwert (6) zwei flächig miteinander verbundene Teilplatten (53', 54') aufweist, die mit ihren den Sägeblättern (7) zugewandten Bereichen Trägerabschnitte (53, 54) bilden, zwischen denen ein Aufnahmeschlitz für die Aufnahme der oberhalb der Längsschultern (51, 52) liegenden Abschnitte der Sägeblätter (7) vorgesehen ist, **dadurch gekennzeichnet**, daß die Teilplatten (53', 54') im Bereich der Trägerabschnitte (53, 54) nach außen versetzt sind und die Unterkanten der Trägerabschnitte (53, 54) die Längsschultern (51, 52) der Sägeblätter (7) abstützen und daß die Höhe des Schwertes (6) im Bereich der Verbindung mit der Säge größer ist als am gegenüberliegenden Ende.

2. Schwert nach Anspruch 1, **dadurch gekennzeichnet**, daß die Teilplatten (53', 54') durch Kleben oder Punktschweißen miteinander verbunden sind.

3. Schwert nach Anspruch 2 oder 3, **dadurch gekennzeichnet**, daß aus den Wandungen der Trägerabschnitte (53, 54) mit einem Ende mit der jeweiligen Wandung verbundene, elastisch verschwenkbare Blattfederstreifen (77, 78) ausgeschnitten sind, die sich in der Ruhelage mit einem Teilbereich in die jeweils benachbarte Hälfte des Aufnahmeschlitzes zwischen den Trägerabschnitten (54, 54) erstrecken und nicht über die Außenfläche des zugehörigen Trägerabschnittes (53, 54) vorspringen.

4. Schwert nach einem der Ansprüche 1 bis 3, **gekennzeichnet** durch in den Wandungen der Trägerabschnitte (53, 54) vorgesehene, den Raum zwischen diesen mit den Schwertaußenflächen verbindende Bohrungen (58, 59).

## Claims

1. Support plate (6) on a saw having two saw blades (7) which are arranged adjacent to one another and in parallel with one another for reciprocating in opposite directions and are provided with a respective longitudinal shoulder (51, 52) which extends longitudinally on their exterior and is turned away from the saw teeth (46, 47, 50), wherein the support plate (6) comprises two partial plates (53', 54') which are connected to one another in a planar manner and, with their regions facing the saw blades (7), form carrier portions (53, 54) between which a receiving slot for receiving the portions of the saw blades (7) located above the longitudinal shoulders (51, 52) is provided, characterised in that the partial plates (53', 54') are offset outwardly in the region of the carrier portions (53, 54) and the lower edges of the carrier portions (53, 54) support the longitudinal shoulders (51, 52) of the saw blades (7) and in that the height of the support plate (6) is greater in the region of the connection to the saw than at the opposite end.

2. Support plate according to claim 1, characterised in that the partial plates (53', 54') are connected to one another by adhesion or spot welding.

3. Support plate according to claim 2 or 3, characterised in that, from the walls of the carrier portions (53, 54) there extend elastically pivotal leaf spring strips (77, 78) which are connected at one end to the respective wall and, in the rest position, extend with a partial region into the respectively adjacent half of the receiving slot between the carrier portions (54, 54) and do not project beyond the external surface of the associated carrier portion (53, 54).

4. Support plate according to one of claims 1 to 3, characterised by bores (58, 59) which are provided in the walls of the carrier portions (53, 54) and connect the space between them to the external surfaces of the support plate.

## Revendications

1. Barre de guidage (6) montée sur une scie à deux lames de scie (7), disposées parallèlement l'une à côté de l'autre, déplaçables de façon oscillante en sens inverse, les lames de scie (7) présentant chacune, en face extérieure, un épaulement longitudinal (51, 52) s'étendant en direction longitudinale, opposé aux dents de scie (46, 47, 50), la barre de guidage (6) présentant deux plaques partielle (53', 54') reliées à plat l'une à l'autre, formant, par leurs zones tournées vers les lames de scie (7), des sections supports (53, 54) , entre lesquelles est prévue une fente de réception destinée à recevoir les sections, situées au-dessus des épaulements longitudinaux (51, 52), des lames de scie (7), caractérisée en ce que les plaques partielles (53', 54') sont décalées vers l'extérieur, dans la zone des sections supports (53, 54), et les arêtes inférieures des sections supports (53, 54) soutenant les épaulements longitudinaux (51, 52) des lames de scie (7), et en ce que la hauteur de la barre de guidage (6), dans la zone de la liaison à la scie, est supérieure à la hauteur sur l'extrémité opposée.

2. Barre de guidage selon la revendication 1, caractérisée en ce que les plaques partielles (53', 54') sont reliées ensemble par collage ou soudure par point.

3. Bar de guidage selon la revendication 2 ou 3, caractérisée en ce que des bandes de ressorts à lame (77, 78) sont découpées à partir des parois des sections supports (53, 54), en étant reliées par une extrémité à la paroi respective et en pouvant pivoter élastiquement, les bandes de ressorts à lame (77, 78) s'étendant, dans la position de repos, avec une zone partielle dans la moitié chaque fois voisine de la fente de réception entre les sections supports (53, 54) et ne faisant pas saillie audessus de la surface extérieure de la section support (53, 54) correspondante.

4. Barre de guidage selon l'une des revendications 1 à 3, caractérisée par des perçages (58, 59), prévus dans les parois des sections supports (53, 54) et reliant l'espace situé entre celles-ci et les surfaces extérieures de la barre de guidage.
